(19) Europäisches Patentamt
European Patent Office
Office européen des brevets

(11) EP 0 724 030 B1

(12) EUROPEAN PATENT SPECIFICATION

(45) Date of publication and mention of the grant of the patent:
**09.04.2003 Bulletin 2003/15**

(51) Int Cl.$^7$: **D01F 8/14**, C08G 63/668

(21) Application number: **96300514.5**

(22) Date of filing: **25.01.1996**

# (54) A hygroscopic fiber containing a hygroscopic polyester copolymer

Hygroskopische Faser enthaltend einen hygroskopischen Copolyester

Fibre hygroscopique contenant un copolyester hygroscopique

(84) Designated Contracting States:
**DE FR GB IT NL**

(30) Priority: **25.01.1995 JP 956695**
**16.10.1995 JP 26737895**

(43) Date of publication of application:
**31.07.1996 Bulletin 1996/31**

(73) Proprietor: **TORAY INDUSTRIES, INC.**
**Tokyo 103-8666 (JP)**

(72) Inventors:
- **Matsumura, Yoshitaka**
  **Mishima-shi, Shizuoka 411 (JP)**
- **Harashina, Yuko**
  **Mishima-shi, Shizuoka 411 (JP)**
- **Higuchi, Tetsunori**
  **Mishima-shi, Shizuoka 411 (JP)**
- **Sasamoto, Tai**
  **Mishima-shi, Shizuoka 411 (JP)**

(74) Representative: **Coleiro, Raymond et al**
**MEWBURN ELLIS**
**York House**
**23 Kingsway**
**London WC2B 6HP (GB)**

(56) References cited:
**EP-A- 0 323 267** **EP-A- 0 386 256**
**WO-A-92/21709** **DD-A- 249 054**
**DE-A- 2 006 810** **DE-A- 2 313 903**
**DE-A- 2 322 600** **DE-B- 2 521 352**
**GB-A- 1 092 435** **US-A- 4 205 158**

- **DATABASE WPI Week 7844 Derwent Publications Ltd., London, GB; AN 78-79186A XP002008485 & JP-A-53 111 116 (ASAHI CHEMICAL IND. KK) , 28 September 1978**
- **DATABASE WPI Week 9424 Derwent Publications Ltd., London, GB; AN 94-197189 XP002008486 & JP-A-06 136 107 (TEIJIN LTD.) , 17 May 1994**
- **DATABASE WPI Week 9424 Derwent Publications Ltd., London, GB; AN 94-197623 XP002008487 & JP-A-06 136 620 (TORAY IND. INC.) , 17 May 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 724 030 B1

## Description

The present invention relates to a hygroscopic polyester copolymer and a fiber containing it and, in particular, a fiber which can be ideally utilized in clothing materials for inner clothing, intermediate wear, sports wear, etc.

Thermoplastic synthetic fibers, typically polyester and polyamide fibers, are widely used mainly for clothing and industrial applications since they are excellent in mechanical intensity, chemical resistance, heat resistance, etc. However, these synthetic fibers are very low in hygroscopicity, and if they are used in direct contact with or near the skin as inner clothing, intermediate wear, sports wear, etc., they are inferior to natural fibers in the feeling of comfort since perspiration from the skin makes the wearer feel stuffy and sticky. Thus, they are restrictively applied in clothing. To overcome the disadvantage, various suggestions have been made. For example, JP-C-60-000475, JP-U-60-040612 and JP-A-60-215835 have proposed attempts to obtain a hygroscopic and comfortable fabric using a combined yarn (i.e. a mixed yarn having different kinds of fiber), a parallelled yarn (i.e. a yarn formed by bringing together filament tows) or a twisted union yarn (i.e. a twisted parallelled yarn) respectively consisting of fibers high in equilibrium moisture regain (coefficient of moisture absorption) and synthetic fibers. These methods certainly improve the feeling of comfort to some extent, but not sufficiently so. Moreover, they have disadvantages in that disperse dyes generally used for dyeing synthetic fibers contaminate the fibers high in equilibrium moisture regain, in that isochroism is poor, and in that stress stretch, etc. are lowered to an extent such that the desired physical properties peculiar to synthetic fibers are lost.

It is also known that polyester fibers can be made hygroscopic by graft-polymerizing acrylic acid or methacrylic acid to polyester fibers and substituting the carboxyl groups of the graft polymer by an alkali metal (JP-A-63-085163). However, this method is not applied in practice because polyesters do not allow easy graft polymerization and because color fastness, light fastness, physical properties of fibers, touch, etc. tend to be lowered.

Methods of imparting hygroscopicity at a stage after processing cause various problems during dyeing or in view of the properties of the fabric obtained. Thus, in order to impart hygroscopicity at a stage of fiber production, in an attempt to solve the above problems, a conjugated fiber of the sheath-core type using a hygroscopic resin having a coefficient of moisture absorption at a ordinary humidity of 10% or more as the core component and a polyester as the sheath component was proposed in JP-A-02-099612. However, this method has a disadvantage in that the hygroscopic resin used as the core component absorbs water, becomes greatly swollen and so cracks the surface of the fiber and flows out due to its high solubility in water, during hot water treatment such as scouring and dyeing.

JP-A-04-108113 discloses a sheath-core type conjugated fiber having a core/sheath ratio of 20/80 to 70/30, with the core in contact with a hollow portion formed within the conjugated fiber, while JP-A-06-136620 discloses the preparation of a hollow fiber by treating a sheath-core type conjugated fiber with hot water. In each case, the core component is a hydrophilic polymer which in fact is not cross-linked. However, it is found that the physical properties (strength-elongation characteristic) of such fibers are liable to deteriorate with the lapse of time.

JP-A-51-136924 proposes a sheath-core type conjugated staple fiber with a hydrophilic polyester as the core component and a non-hydrophilic polyester as the sheath component. The hydrophilic polyester used is a polyalkylene glycol copolymer or a polyalkylene glycol copolymer mixed with a sulfonic acid or phosphoric acid ester derivative. Instead of filaments, staple fibers are employed so as to increase the number of fiber ends, the intention being thereby to enhance water absorbability. However, we have found that even though the staple fiber does have improved water absorbability, it does not have improved moisture absorbability.

JP-A-53-111116 proposes conjugated fiber of the sheath-core type with a specific polyether ester as the core component. However, the intended effect is merely to make the fiber antistatic, and moreover, since a polyester obtained by copolymerizing a polyalkylene glycol alone is used as the core component, the physical properties (strength-elongation characteristic) of the fiber deteriorate with lapse of time. Furthermore, the polyether ester is remarkably colored, and so impairs the quality of the final product obtained.

JP-A-52-055721 proposes a conjugated fiber with a non-hydrophilic polymer formable into a fiber as the sheath component, a hydrophilic polymer, which in fact is not crosslinked as the core component, and a continuous void in the core and/or between the core and the sheath along the fiber axis. However, again it is found that the physical properties of such fibers deteriorate with the lapse of time.

JP-A-62-267352 discloses a polyester composition containing 50 to 70 wt% of a specific polyalkylene glycol. The fibers made of the composition are poor in physical properties (low strength and elongation) and are also poor in color fastness, and so cannot be used for clothing and industrial applications.

JP-A-06-123012 discloses a sheath-core type hygroscopic polyester fibre. This fibre has a polymer obtained by blending a block polyether ester with a polyester obtained by copolymerizing an alkylene sulfoisophthalate and a polyoxyalkylene glycol, as the core component. However, the amount of the copolymerized polyalkylene glycol in the core component of the conjugated fiber is too small to obtain sufficient hygroscopicity.

JP-A-53-099296, JP-A-58-138753 and JP-A-06-136107 disclose polyether esters prepared using a bisphenol A-ethylene oxide addition product. However, these copolymers are low in hygroscopicity, and moreover, since synthetic fibers containing this polymer suffer a deterioration in their physical properties with lapse of time, for example, they

easily suffer a decline in elongation, difficulties are liable to occur during weaving and knitting which render them impractical.

EP-A-0386256 discloses a polyester composition comprising (a) an aromatic polyester resin (100 parts by weight) and (b) a polyoxyethylene polyether (0.2 to 30 parts) including a higher oxyolefin content copolymerized with the polyester resin. The copolyester may additionally include a polyfunctional component having more than two carboxylic acid or hydroxyl groups. The composition may provide a component of certain types of conjugate fibre.

The present invention seeks to provide a hygroscopic yarn of high commercial value which utilizes a polyester copolymer high in coefficient of moisture absorption and has specific moisture absorbing and releasing characteristic, for overcoming the above problems.

To this end, the present invention provides a hygroscopic conjugated fibre comprising a conjugated fibre forming polymer component and a conjugate hygroscopic polyester copolymer component, which polyester copolymer comprises units derived from

(i) an acid component and a glycol component capable of forming a polyester;
(ii) a hydrophilic compound (A) selected from polyoxyalkylene compounds, polyoxazolines, polyacrylamide and derivatives thereof, polysulfoethyl methacrylate, polyacrylic and polymethacrylic acids and salts thereof, polyhydroxyethyl acrylate and methacrylate, polyvinyl alcohol and polyvinyl pyrrolidone.
(iii) a cross-linking agent (B) which is a polyfunctional compound represented by the following formula (II);

$$R^4O)_nR^3(COOR^5)_m \quad (II)$$

where $R^3$ is a trivalent to hexavalent organic residue; $R^4$ is a hydrogen atom or acetyl group; $R^5$ is a hydrogen atom or alkyl group; and $3 \leq m + n \leq 6$;
the hydrophilic component (A) being present in the said copolymer in an amount of 40 to 90 wt% based on the total weight of the polyester copolymer; and
which polyester copolymer has a release parameter (ΔMR), which defines moisture absorption as hereinafter explained, of at least 12%.

The polyester copolymer may be derived from an ester component capable of polymerization, a hydrophilic compound (A) capable of copolymerizing with the ester component and a cross-linking agent (B) capable of a cross-linking reaction with at least units derived from the ester component. However, a proportion of the cross-linking agent (B) may be dispersed in, rather than having already reacted with, the copolyester so as to allow subsequent cross-linking reaction for inhibiting deterioration in physical properties.

Especially preferred embodiments of the invention will now be described.

The acid component of the polyester copolymer may be one or more dicarboxylic acids, preferably having a molecular weight no greater than about 400, which may be selected from aromatic dicarboxylic acids such as terephthalic acid, isophthalic acid, and naphthalene-2,6-dicarboxylic acid, and aliphatic dicarboxylic acids such as adipic acid and sebacic acid. Having regard to achieving heat resistance and good fiber formability, terephthalic acid is especially preferable. The glycol component may be one or more glycols, preferably having a molecular weight no greater than about 400, which may be selected from, for example, ethylene glycol, propylene glycol, tetramethylene glycol, diethylene, glycol and neopentyl glycol. Having regard to achieving heat resistance and good fiber formability, ethylene glycol is especially preferable.

The polyester copolymer of the present invention has (1), copolymerized in it, a hydrophilic compound (A) to render the copolymer hygroscopic, and as an auxiliary component to further enhance hygroscopicity and also to stabilize the physical properties of the fiber, (2), copolymerized or dispersed in it, a cross-linking agent (B).

The amount of the hydrophilic compound (A) copolymerized in the polyester copolymer should be 40 to 99 wt%, preferably 50 to 95 wt%, more preferably 55 to 90 wt% based on the total weight of the polyester copolymer having regard to achieving hygroscopicity and spinnability.

The release parameter (hereinafter "ΔMR") defining the moisture absorbing and releasing characteristic of the polyester copolymer is preferably high in order to make the synthetic fiber made from it more hygroscopic. For a polyester copolymer of the present invention ΔMR should be 12% or more, preferably 15% or more, more preferably 18% or more.

Realistically ΔMR is preferably 80% or less, and for improved stability in the physical properties of the yarn prepared from the fiber, it is preferably 70% or less.

The value ΔMR is the difference (ΔMR (%) MR2 - MR1) obtained by subtracting the coefficient of moisture absorption (MR1) at 20°C and 65% RH from the coefficient of moisture absorption (MR2) at 30°C and 90% RH. The

value ΔMR is an indicator of the ability of the fiber to release moisture from the worn clothes into open air, and therefore of the ability of the fiber to ensure a feeling of comfort by the wearer of such clothes. It represents the difference between the coefficient of moisture absorption at 30°C and 90% RH, simulating the temperature and humidity in clothes caused by execution of light to medium work or light to medium motion and the coefficient of moisture absorption at 20°C and 65% RH simulating the temperature and humidity of open air. Thus, ΔMR is a reasonable indicator for the likely feeling of comfort of worn clothes, and a higher ΔMR value means a higher moisture absorbing and releasing capability, hence better feeling of comfort when a fabric is worn.

For further enhancing ΔMR, the hydrophilic compound (A) preferably has a number average molecular weight of 600 to 20000, more preferably 2000 to 10000, still more preferably 3000 to 9000.

The hydrophilic compound (A) is a compound having one or more groups capable of ester formation and copolymerizable with a polyester, and is selected from polyoxyalkylene compounds, polyoxazolines, polyacrylamide and its derivatives, polysulfoethyl methacrylate, poly(meth)acrylic acid and its salts, polyhydroxyethyl (meth)acrylate, polyvinyl alcohol, and polyvinyl pyrrolidone. Among them, polyoxyalkylene compounds are preferable in view of their compatibility with the polyester. The polyoxyalkylene compounds include, for example, polyoxyethylene compounds, polyoxypropylene compounds and polyoxytetramethylene compounds. Above all, polyoxyethylene compounds are preferable, and polyethylene glycol is especially preferable because it has a large effect in enhancing hygroscopicity. Furthermore, the hydrophilic compound (A) preferably has a polyoxyalkylene component provided, for example, by polyethylene glycol or polyethylene glycol and a crystallization inhibitor component. Such a compound is preferred because its compatibility with the polyester is higher. In this case, the crystallization inhibitor component may be any organic residue existing in a molecular chain or at one or both terminal(s), to disturb the symmetry of the repeating unit of polyethylene glycol. The inhibition of crystallization means that the melting point obtained by differential scanning calorimetry (DSC, temperature rise rate 16°C/min) becomes lower than the melting point of polyethylene glycol with the same molecular weight. Specific compounds include derivatives of polyethylene glycol represented by the following formula (I)

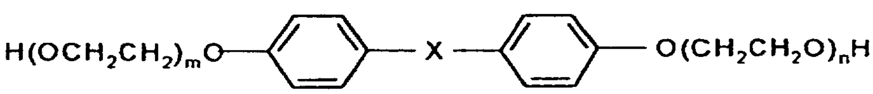

(I)

where X is $-CR^1R^2-$ ($R^1$ and $R^2$ are each, independently of one another, a hydrogen atom or alkyl group), $-SO_2-$, -O-, -S- or -C(O)-; and n and m are given by $10 \leq n + m \leq 450$ and for a given residue are whole numbers. A compound having ethylene oxide (EO) added, for example, to bisphenol A or bisphenol S is preferred having regard to achieving higher compatibility with the polyester.

It is preferred, for improving heat resistance, that such compounds are mostly polymerized in the polyester, but a proportion thereof may also be dispersed in the polymer.

Moreover, the polyester copolymer of the present invention contains the cross-linking agent (B). The cross-linking agent is a compound which can react with the polyester, to form a cross-linked structure, namely a polyfunctional compound represented by the following formula (II)

$$(R^4O)_nR^3(COOR^5)_m \qquad (II)$$

where $R^3$ is a trivalent to hexavalent organic residue; $R^4$ is a hydrogen atom or acetyl group; $R^5$ is a hydrogen atom or alkyl group; and $3 \leq m + n \leq 6$. Such cross-linking agents are preferred because their reactivity with the polyester can be easily controlled. At least a proportion of the cross-linking agent, rather than having already reacted with the copolyester, may be merely at least partially dispersed in the polyester, so that at least some of the functional groups are later free to react to provide a cross-linked structure which inhibits any change in the properties of yarns of the fibres with the lapse of time. The cross-linking agent is preferably selected from polyfunctional carboxylic acids such as trimellitic acid, and pyromellitic acid, polyols such as glycerol, trimethylolpropane, and pentaerythritol having regard to the color tone of the polymer. Trimellitic acid is especially preferred. Since the cross-linking agent (B) is present, the polymer is even higher in hygroscopicity, and a cross-linked structure is formed in the polymer, whereby the yarn obtained from fibres thereof is especially resistant to change in physical properties with lapse of time.

The amount of the cross-linking agent in the polyester copolymer is preferably 0.01 to 30 mol%, more preferably 0.5 to 15 mol%, still more preferably 1 to 10 mol% based on the total amount of acid component of the entire polyester. This total amount of acid component includes (when component (B) is an acid) that of the cross-linking agent

(B). If the amount is in this range, higher hygroscopicity, good spinnability and improved physical properties such as strength of the yarn can be secured.

To further enhance the hygroscopicity of the polyester copolymer, the polyester copolymer can contain a compound with one or more polar group which can be selected, for example, from an amino group, sulfonic acid group, carboxyl group, hydroxyl group, amide group or phosphonic acid group. Such may be in the form of a dispersion in the polyester or copolymerized with the polyester.

The melt viscosity of the polyester copolymer of the present invention is preferably 500 to 5000 poises (50 to 500 Pa.s) more preferably 600 to 3000 poises (60 to 300 Pa.s), still more preferably 800 to 2000 poises (80 to 200 Pa.s), when measured at 280°C at a shear rate of 50 $cm^{-1}$. If the melt viscosity is in this range, the flow during conjugated spinning, for example, is stable to allow spinning without yarn breaking.

Furthermore, the polyester copolymer of the present invention has hygroscopic swelling capability. Considering color fastness, the degree of hygroscopic swelling is preferably 1.2 to 3.2 times, more preferably 1.5 to 3.0 times in 20°C water. If the degree of hygroscopic swelling is in this range, a sheath-core type conjugated yarn obtained, for example, may be stable in form and resistant to sheath cracking. To keep the degree of hygroscopic swelling in this range, for example, the phase separated state of the polyester copolymer is selected properly.

The polyester copolymer can, of course, contain a pigment such as titanium oxide or carbon black, surface-active agent such as alkylbenzenesulfonic acid, known antioxidant, anticoloring agent, light resisting agent, antistatic agent, etc. provided that the desired properties of a copolyester of the present invention are not seriously impaired.

The polyester copolymer of the present invention can be used as a fiber component such as a conjugated component or blended component, together with a polymer capable of fiber formation, to obtain a highly hygroscopic fiber not impaired in physical properties such as strength.

In the case of a fiber with a polyester copolymer of the present invention mixed with a polymer capable of fiber formation, the amount of the polyester copolymer is preferably 3 to 40 wt%, more preferably 5 to 35 wt%, still more preferably 7 to 30 wt% based on the total amount of the fiber. The lower limit of the amount is set for imparting sufficient hygroscopicity, and the upper limit is set having regard to maintaining desired spinnability and physical properties of the fiber.

The polymer capable of fiber formation which can be utilized in forming a fiber of the present invention can be selected from polyesters, e.g. polythylene terephthalate and polybutylene terephthalate. Above all, a polyester mainly composed of polyethylene terephthalate most generally used for synthetic fibers for clothes is preferable.

The synthetic fiber of the present invention may be, for example, a conjugated fiber of the sheath-core type, a conjugated hollow fiber of the sheath-core type, a conjugated fiber of the islands in a sea type, a conjugated fiber of the segment type (where segments adhere together), or a blended fiber. The hygroscopic copolyester of the present invention can be used as a conjugated component in an optional proportional amount. The use of the hygroscopic copolyester of the present invention as a conjugated core or land component is preferable in view of the higher color fastness thereby obtained.

For example, when the polyester copolymer of the present invention is used as the core component in a sheath-core type conjugated fiber or sheath-core type conjugated hollow fiber, the ratio by weight of core/sheath is preferably 5/95 to 90/10, more preferably 7/93 to 50/50, still more preferably 10/90 to 30/70. The conjugating ratio can be optionally selected for applications with or without dyeing. The lower limit to the amount of the core is set for imparting sufficient hygroscopicity, and the upper limit is set having regard to maintaining desired spinnability and physical properties of the fiber.

It is preferable that a hollow portion exists at the interface between the core and the sheath. If the hollow portion exists, it can ease and absorb the swelling power of the hygroscopic polymer, to prevent the sheath cracking when the core is hygroscopically swollen. The proportion of the hollow portion, in terms of its cross-sectional area and based on the cross sectional area of the fiber defined by the outer periphery of the fiber is preferably at least 1.4%, more preferably 1.8% or more, still more preferably 2.4% or more. Having regard to spinning stability, it is preferable that the hollow portion represents 70% or less of the total cross-sectional area. In an islands in a sea type conjugated fiber or a segmented type conjugated fiber, the conjugating ratio of the polyester copolymer (by weight) is preferably 5/95 to 90/10, more preferably 7/93 to 50/50, still more preferably 10/90 to 30/70. The conjugating ratio can be optionally selected for applications with or without dyeing. The lower limit of the conjugating ratio is set for imparting sufficient hygroscopicity, and the upper limit is set having regard to maintaining desired spinnability and physical properties of the fiber. Furthermore, the islands in a sea type conjugated fiber and the segment type conjugated fiber can also have a hollow portion at any optional place, but it is preferable that the hollow portion exists at the interface between sea and land or at the interface between the segment components stuck together. Again, for such islands in a sea or segment type conjugated fibers, the proportion of the hollow portion, in terms of its cross-sectional area, as described above, is at least 1.4%, more preferably 1.8% or more, still more preferably 2.4% or more and is preferably 70% or less.

In order to maximize the practical comfort to the wearer, the ΔMR of the fiber is recommended to be as high as possible, preferably 1.0% or more, more preferably 1.5% or more, still more preferably 2.0% or more.

In the present invention, the component which is conjugated or blended with the polymer capable of fiber formation may also contain, in addition to the polyester copolymer of the invention, another fibre forming polymer for example, a polyolefin, polyamide, polyester or polycarbonate, provided that the desired properties of the fiber are not seriously impaired.

The polymer capable of fiber formation can, of course, contain a pigment such as titanium oxide or carbon black, and also any known antioxidant, anticoloring agent, light resisting material, antistatic agent, etc. as desired for a given application.

In preparing a fiber of the present invention, especially a conjugated fiber consisting of a polymer capable of fiber formation and the polyester copolymer of the present invention, any known method can be employed. A typical method for preparing a sheath-core type conjugated fiber is described below.

For example, in the case of a sheath-core type conjugated fiber, a polyester (sheath) and the polyester copolymer of the present invention (core) are separately rendered molten, and introduced into a spinning pack, to form a sheath-core conjugated flow in a die, which is spun out of a discharge opening to form a plurality of conjugated fibers.

The resultant spun filament yarn is taken up at a predetermined speed, and once wound as a package, and the undrawn yarn obtained is drawn by a conventional drawing machine. For this drawing, the spun yarn can be directly continuously drawn without being wound after having been taken up, or can be taken up at a high speed of 4000 m/min or more, to make, in one operation a yarn with desired performance characteristics, without the yarn being substantially drawn. For directly drawing after spinning, for example, the spun yarn can be taken up at 1000 to 5000 m/min and in succession drawn and thermally set at 3000 to 6000 m/min.

The sectional form of the fiber of the present invention is not limited to a circle, and can also be a special form such as a triangle, flat or multi-leaf. Moreover, the fiber can be either a filament or staple fiber, which can be properly selected to suit each application. The fabric can be a woven fabric, knitted fabric or nonwoven fabric, etc. which can be properly selected to suit each application.

Embodiments of the present invention will now be described below in more detail with reference to the following Examples.

In the Examples, the values for respective properties of the polyesters and fibers containing them were obtained according to the following methods.

A. Intrinsic viscosity [η] of polyester.
Obtained for an o-chlorophenol solution at 25°C.

B. Moisture absorption and release parameter (ΔMR) of polyester copolymer or fiber containing it.
For a polymer, 1 g of a chip was cut into an about 2 mm cube to make a sample, and for a yarn, 1 to 3 g of a raw yarn or cloth was used as a sample. The absolute dry weight of the sample was measured. The sample was allowed to stand in a thermo-hygrostat (PR-2G produced by Tabai) at 20°C and 65% RH or at 30°C and 90% RH for 24 hours, and weighed. The coefficient of moisture absorption was obtained from the following formula:

$$\text{Coefficient of moisture absorption (\%)} = [(\text{Weight after moisture absorption} - \text{Absolutely dry weight})/\text{Absolutely dry weight}] \times 100$$

From the coefficient of moisture absorption measured after treatment at 20°C and 65% RH and that at 30°C and 90% RH (respectively expressed as MR1 and MR2), the moisture absorption coefficient difference ΔMR (%) = MR2 - MR1 was obtained. If the polyester copolymer is higher in ΔMR, the hygroscopicity of the yarn can, to advantage, be more efficiently enhanced. Accordingly, the following criterion was used:

$$\Delta MR \geq 18 \ ... \ o$$

$$12 \leq \Delta MR < 18 \ ... \ \Delta$$

$$\Delta MR < 12 \ ... \ x$$

C. Melt viscosity of polyester copolymer.
A polyester copolymer was dried in vacuum at 130°C for 12 hours, and the melt viscosity was measured by a melt

indexer produced by Takara Kogyo, at a load of 325 g, 280°C and a shear rate of 50 $cm^{-1}$.

D. Degree of hygroscopic swelling.
A polyester copolymer chip was dried in vacuum at 130°C for 12 hours, accurately weighed, and put into a container filled with water. After 24 hours, the chip with water absorbed was weighed, and the ratio of the chip weight after water absorption to the chip weight before water absorption was obtained from the following formula as the degree of hygroscopic swelling.
Degree of hygroscopic swelling = Chip weight after water absorption/Chip weight before water absorption

E. Spinnability.
Spinning was effected for 3 hours under the conditions stated in Example 1. The following criterion was used:

No yarn breaking ... o
Yarn breakage once ... Δ
Yarn breakage two or more times ... x

F. Strength and elongation.
A Tensilon tensile testing machine produced by Toyo Baldwin Co., Ltd. was used, to obtain a stress-strain curve with the sample length as 20 cm at a tensile speed of 10 cm/min, and from the curve, the respective values were obtained.

G. Change of yarn with the lapse of time.
A drawing yarn was allowed to stand at 20°C and 70% RH for 1 month, and the strength-elongation characteristic stated in F was obtained, compared with that obtained immediately after drawing, and the deterioration in elongation measured.
The following criterion was used:

Elongation decreased by less than 8% ... o
Elongation decreased by 8% to less than 16% (for example, if the elongation decreased from 40% to 32%, the proportional reduction is 8%) ... Δ
Elongation decreased by 16% or more (for example, elongation decreased from 40% to 24% or less) ... x

H. Proportion of hollow portion.
A section of a fiber was photographed at about 100 times magnification, and each photo was further enlarged to twice the size. 10 single fibers were selected, and the cross-sectional area of the hollow portion as a proportion of the entire section was calculated from the following formula based on the cross-sectional area of the fiber defined by the external periphery of the fiber.

$$\text{Hollow portion area (\%)} = [(\text{Area of hollow portion})/(\text{Area of entire section})] \times 100$$

Example 1

A flask was charged with 188 parts of terephthalic acid dimethyl ester, 124 parts of ethylene glycol, 7.6 parts of trimethyl trimellitate (TMTM) and 0.4 part of tetrabutyl titanate, and while methanol was distilled away at 140 to 230°C, ester interchange reaction was effected. Then, an ethylene glycol solution containing 0.08 part of phosphoric acid trimethyl ester, and 582 parts of polyethylene glycol (PEG) having a number average molecular weight of 6000, 1.2 parts of Irganox 1010 (produced by Ciba Geigy) as an antioxidant, 0.8 part of silicone as a defoaming agent, and 0.4 part of tetrabutyl titanate were added to the reaction product, and polymerization was effected at a reduced pressure of 1.0 mm Hg at 250°C for 4 hours, to obtain a polyester copolymer. The amount of polyethylene glycol copolymerized in the copolymer was 75 wt%. The ΔMR of the polyester copolymer obtained was 31.0% (M1 = 2.5%, M2 = 33.5%).
Furthermore, the melt viscosity (280°C) of the polyester copolymer obtained was 1100 poises (110 Pa.s), and the degree of hygroscopic swelling was 2.8 times.
The polyester copolymer as the core component and polyethylene terephthalate having an intrinsic viscosity of 0.70 as the sheath component were separately rendered molten, and discharged from concentric sheath-core conjugating dies at a ratio by weight of core/sheath = 15/85, to obtain an undrawn yarn. It was drawn and thermally treated to obtain a concentric sheath-core type conjugated yarn of 75 deniers and 24 filaments. The yarn was cylindrically knitted, and its ΔMR was measured and found to be 2.8%. It was also good in strength-elongation characteristic. It did

not decrease in elongation with lapse of time.

Examples 2 to 7, and Comparative Example 1

In Examples 2 to 6, polyester copolymers were obtained as in Example 1, with the proportional amount of polyethylene glycol copolymerized in the polyester copolymer kept constant, but with differing amounts of TMTM.

In Example 7, a polyester copolymer was obtained as in Example 1, with the same composition, but for a shorter reaction time (3 hrs). The melt viscosity of the polymer was therefore comparatively low. The decrease in. elongation of the yarn was 10%.

In Comparative Example 1, spinnability was poor, and among the properties of the yarn, the elongation decreased with lapse of time (Table 1).

Examples 8 to 14, and Comparative Example 2

Polyester copolymers and polyester yarns were obtained as in Examples 1 to 7 and Comparative Example 1, except that bisphenol A ethylene oxide (EO) addition product (BPA) having a number average molecular weight of 6000 was used instead of polyethylene glycol in the polyester copolymer. In Comparative Example 2, spinnability was poor and the elongation decreased with lapse of time (Table 2).

Examples 15 to 21, and Comparative Example 2

Polyester copolymers and yarns were obtained as in Examples 1 to 7 and Comparative Example 1, except that a bisphenol sulfone (S), having a number average molecular weight of 6000, /EO addition product (BPS) was used instead of polyethylene glycol in the polyester copolymer. In Comparative Example 3, spinnability was poor and the elongation decreased with lapse of time (Table 3).

Examples 22 to 31, and Comparative Examples 4 and 5

Polyester copolymers were obtained as in Example 1, except that the amount of TMTM was kept constant at 3 mol% and that polyethylene glycol was changed in molecular weight or copolymerized amount. Yarns were prepared as in Example 1, and the properties of the yarns are shown in Table 4. When the amount of PEG copolymerized was smaller than 40 wt% (Comparative Example 4), sufficient moisture absorbability could not be obtained. When the amount of PEG copolymerized was larger than 99 wt% (Comparative Example 5), moisture absorbability was low, and when the polyester copolymer was processed into a fiber, yarn breakage occurred very often, not allowing the intended conjugated fiber to be obtained, since the polyester copolymer was low in spinnability (Table 4).

Examples 32 to 36

The polyester copolymer obtained as the core component in Example 1 and the same polyethylene terephthalate having an intrinsic viscosity of 0.70 used as the sheath component in Example 1 were separately rendered molten, and from concentric sheath-core conjugating dies, undrawn yarns were obtained at five different core-sheath conjugating ratios. They were drawn and heat-treated to obtain concentric sheath-core type conjugated yarns of 75 deniers and 24 filaments respectively. The properties of the yarns are shown in Table 5. According to the increase of the core-sheath ratio, ΔMR increased, but the strength and elongation decreased, while the elongation changed to some extent with lapse of time (Table 5).

Examples 37 to 41

Sheath-core type conjugated hollow yarns (hollow portion area 6%) of 75 deniers and 24 filaments respectively were obtained as in Example 1, except that dies for forming a hollow portion at the interface between sheath and core were used. The properties of the yarns are shown in Table 6. According to the increase of the core-sheath ratio, ΔMR increased, but the strength and elongation decreased, while the elongation changed to some extent with lapse of time. The yarns were cylindrically knitted into fabrics which were dyed. They were good in fastness (Table 6).

Examples 42 to 46

The polyester copolymer obtained in Example 1 as the land component (18 land pieces) and polyethylene terephthalate having in an intrinsic viscosity of 0.70 as the sea component were separately rendered molten, and from

sea-land type conjugating dies, undrawn yarns were obtained at properly different land/sea ratios. They were drawn and heat-treated, to obtain sea-land type conjugated yarns of 75 deniers and 9 filaments respectively. The properties of the yarns are shown in Table 7. According to the increase of the core-sheath ratio, ΔMR increased, but the strength and elongation decreased, while the elongation changed to some extent with lapse of time (Table 7).

Examples 47 to 49

The polyester copolymer (A) obtained in Example 1 and polyethylene terephthalate (B) having an intrinsic viscosity of 0.70 were separately rendered molten and from segment type conjugating dies, undrawn yarns were discharged at segment ratios (by weight) of A/B - 60/40, 50/50 and 40/60. They were drawn and heat-treated to obtain segment type conjugated yarns of 75 deniers and 24 filaments respectively. The properties of the yarns are shown in Table 8. They were high in ΔMR, strength and elongation (Table 8).

Examples 50 to 54

The polyester copolymer (A) obtained in Example 1 and polyethylene terephthalate (B) having an intrinsic viscosity of 0.70 were rendered molten and mixed in an extruder at appropriate different ratios by weight, and from circular dies, undrawn yarns were discharged. They were drawn and heat-treated to obtain polyester yarns of 75 deniers and 24 filaments respectively. The properties of the yarns are shown in Table 9. With increase of the blending ratio, ΔMR increased, but the strength and elongation decreased while the elongation changed to some extent with lapse of time (Table 9).

[Table 1]

| | Composition and hygroscopic properties of copolymer | | | | | Spinnability | Properties of yarn | | | |
|---|---|---|---|---|---|---|---|---|---|---|
| | Amount of PEG copolymerized (wt%) | Amount of TMTM copolymerized (mol%) | ΔMR (%) | Evaluation | Melt viscosity (poises) | | Strength (g/d) | Elongation (%) | ΔMR (%) | Change over time |
| Example 1 | 75 | 3 | 31.0 | o | 1100 | o | 4.2 | 40.2 | 4.2 | o |
| Example 2 | 75 | 1 | 30.6 | o | 1120 | o | 4.3 | 41.3 | 4.3 | o |
| Example 3 | 75 | 5 | 32.2 | o | 1080 | o | 4.2 | 40.4 | 4.1 | o |
| Example 4 | 75 | 12 | 31.2 | o | 1800 | o | 3.8 | 38.4 | 3.8 | o |
| Example 5 | 75 | 25 | 31.4 | o | 2120 | Δ | 3.4 | 36.5 | 3.8 | o |
| Example 6 | 75 | 40 | 30.2 | o | 2400 | Δ | 3.0 | 33.4 | 3.7 | o |
| Comparative example 1 | 75 | 0 | 30.3 | Δ | 200 | × | 4.2 | 42.0 | 3.8 | × |
| Example 7 | 75 | 3 | 29.0 | Δ | 310 | Δ | 4.2 | 41.2 | 3.9 | Δ |
| Molecular weight of PEG: 6000 | | | | | | | | | | |

[Table 2]

| | Composition and hygroscopic properties of copolymer | | | | | Spinnability | Properties of yarn | | | |
|---|---|---|---|---|---|---|---|---|---|---|
| | Amount of BPA copolymerized (wt%) | Amount of TMTM copolymerized (mol%) | ΔMR (%) | Evaluation | Melt viscosity (poises) | | Strength (g/d) | Elongation (%) | ΔMR (%) | Change over time |
| Example 8 | 75 | 3 | 30.2 | o | 1120 | o | 4.2 | 40.2 | 4.1 | o |
| Example 9 | 75 | 1 | 31.6 | o | 1140 | o | 4.3 | 41.3 | 4.3 | o |
| Example 10 | 75 | 5 | 30.9 | o | 1080 | o | 4.2 | 40.4 | 4.2 | o |
| Example 11 | 75 | 12 | 31.7 | o | 1700 | o | 3.8 | 38.4 | 3.9 | o |
| Example 12 | 75 | 25 | 31.4 | o | 2180 | o | 3.4 | 36.5 | 3.8 | o |
| Example 13 | . 75 | 40 | 31.2 | o | 2360 | Δ | 3.0 | 33.4 | 3.7 | o |
| Comparative example 2 | 75 | 0 | 30.0 | Δ | 220 | × | 4.2 | 41.0 | 4.0 | × |
| Example 14 | 75 | 3 | 29.0 | Δ | 360 | Δ | 4.0 | 39.0 | 3.9 | Δ |
| Molecular weight of BPA: 6000 | | | | | | | | | | |

[Table 3]

| | Composition and hygroscopic properties of copolymer | | | | | Spinnability | Properties of yarn | | | |
|---|---|---|---|---|---|---|---|---|---|---|
| | Amount of BPS copolymerized (wt%) | Amount of TMTM copolymerized (mol%) | ΔMR (%) | Evaluation | Melt viscosity (poises) | | Strength (g/d) | Elongation (%) | ΔMR (%) | Change over time |
| Example 15 | 75 | 3 | 29.0 | o | 1050 | o | 4.1 | 39.2 | 4.2 | o |
| Example 16 | 75 | 1 | 30.2 | o | 1100 | o | 4.2 | 40.3 | 4.3 | o |
| Example 17 | 75 | 5 | 31.2 | o | 1050 | o | 4.1 | 40.1 | 4.1 | o |
| Example 18 | 75 | 12 | 31.8 | o | 1850 | o | 3.7 | 38.4 | 3.7 | o |
| Example 19 | 75 | 25 | 30.4 | o | 2020 | o | 3.3 | 36.5 | 3.7 | o |
| Example 20 | 75 | 40 | 29.2 | o | 2520 | Δ | 3.0 | 31.4 | 3.7 | o |
| Comparative example 3 | 75 | 0 | 29.8 | Δ | 270 | × | 4.1 | 40.0 | 4.1 | × |
| Example 21 | 75 | 3 | 29.0 | Δ | 390 | Δ | 4.2 | 40.6 | 3.9 | Δ |
| Molecular weight of BPS: 6000 | | | | | | | | | | |

[Table 4]

| | Composition and property | | | | Properties of yarn | | | |
|---|---|---|---|---|---|---|---|---|
| | Molecular weight of PEG | Amount of PEG copolymerized (wt%) | ΔMR (%) | Evaluation | Strength (g/d) | Elongation (%) | ΔMR (%) | Change over time |
| Comparative example 4 | 6000 | 35 | 10.5 | × | 4.1 | 40.4 | 1.4 | o |
| Example 22 | 6000 | 45 | 12.8 | Δ | 4.3 | 41.3 | 2.0 | o |
| Example 23 | 6000 | 55 | 24.7 | o | 4.1 | 40.6 | 3.7 | o |
| Example 24 | 6000 | 70 | 30.3 | o | 4.2 | 41.5 | 4.5 | o |
| Example 25 | 6000 | 93 | 28.6 | o | 4.2 | 40.2 | 4.2 | Δ |
| Comparative example 5 | 6000 | 99.5 | 8.6 | × | - | - | - | - |
| Example 26 | 400 | 75 | 12.3 | Δ | 4.2 | 40.1 | 1.9 | Δ |
| Example 27 | 1000 | 75 | 23.6 | o | 4.2 | 41.2 | 2.7 | o |
| Example 28 | 3000 | 75 | 26.1 | o | 4.2 | 40.5 | 4.2 | o |
| Example 29 | 5000 | 75 | 28.4 | o | 4.3 | 41.3 | 3.3 | o |
| Example 30 | 8000 | 75 | 30.0 | o | 4.2 | 40.4 | 1.9 | o |
| Example 31 | 24000 | 75 | 12.1 | Δ | 4.2 | 41.0 | 1.8 | o |
| TMTM 3 mol% | | | | | | | | |

[Table 5]

| | Properties of yarn | | | | |
|---|---|---|---|---|---|
| | Core-sheath conjugating ratio | Strength (g/d) | Elongation (%) | ΔMR (%) | Change over time |
| Example 32 | 7/93 | 4.6 | 38.4 | 2.1 | o |
| Example 33 | 10/90 | 4.3 | 41.0 | 2.8 | o |
| Example 34 | 25/75 | 3.8 | 41.2 | 8.2 | o |
| Example 35 | 50/50 | 2.6 | 27.3 | 14.1 | Δ |
| Example 36 | 90/10 | 1.3 | 22.1 | 26.1 | Δ |

[Table 6]

| | Properties of yarn | | | | |
|---|---|---|---|---|---|
| | Core-sheath conjugating ratio | Strength (g/d) | Elongation (%) | ΔMR (%) | Change over time |
| Example 37 | 7/93 | 4.5 | 41.4 | 2.2 | o |
| Example 38 | 10/90 | 4.3 | 40.6 | 2.7 | o |
| Example 39 | 25/75 | 3.6 | 39.6 | 8.4 | o |
| Example 40 | 50/50 | 2.5 | 28.5 | 14.0 | Δ |
| Example 41 | 90/10 | 1.2 | 22.4 | 25.6 | Δ |

[Table 7]

| | Properties of yarn | | | | |
|---|---|---|---|---|---|
| | Land/sea conjugating ratio | Strength (g/d) | Elongation (%) | ΔMR (%) | Change over time |
| Example 42 | 7/93 | 4.5 | 39.4 | 2.0 | o |
| Example 43 | 10/90 | 4.2 | 40.7 | 2.8 | o |
| Example 44 | 25/75 | 3.8 | 39.5 | 8.3 | o |
| Example 45 | 50/50 | 2.7 | 28.8 | 14.6 | Δ |
| Example 46 | 90/10 | 1.3 | 21.4 | 26.5 | Δ |

[Table 8]

| | Properties of yarn | | | | |
|---|---|---|---|---|---|
| | A/B conjugating ratio | Strength (g/d) | Elongation (%) | ΔMR (%) | Change over time |
| Example 47 | 60/40 | 3.4 | 37.4 | 15.0 | o |
| Example 48 | 50/50 | 3.7 | 40.0 | 13.8 | o |
| Example 49 | 40/60 | 3.7 | 39.5 | 11.2 | o |

[Table 9]

| | Properties of yarn | | | | |
|---|---|---|---|---|---|
| | A/B blending ratio | Strength (g/d) | Elongation (%) | ΔMR (%) | Change over time |
| Example 50 | 7/93 | 4.2 | 40.4 | 1.9 | o |
| Example 51 | 10/90 | 3.8 | 41.0 | 2.8 | o |
| Example 52 | 20/80 | 3.5 | 35.3 | 5.2 | o |
| Example 53 | 35/65 | 2.4 | 24.3 | 9.1 | Δ |
| Example 54 | 70/30 | 1.2 | 20.0 | 18.5 | Δ |

Polyester copolymers embodying the present invention have very high hygroscopicity, and yarns obtained from them have sufficient hygroscopicity to ensure wearing comfort.

The yarns also have a dry touch, softness and high color fastness and light fastness. Fibers embodying the present invention are suitable for underwear, shirts, blouses, intermediate wear, sports wear, slacks, outer wear, interlinings, curtains, wall paper, and furthermore, are highly practical for bed sheets, bedquilt covers, fillings, etc.

## Claims

**1.** A hygroscopic conjugated fibre comprising a conjugated fibre forming polyester component and a conjugated hygroscopic polyester copolymer component, which polyester copolymer comprises units derived from

(i) an acid component and a glycol component capable of forming a polyester;
(ii) a hydrophilic compound (A) selected from polyoxyalkylene compounds, polyoxazolines, polyacrylamide and derivatives thereof, polysulfoethyl methacrylate, polyacrylic and polymethacrylic acid and salts thereof, polyhydroxyethyl acrylate and methacrylate, polyvinyl alcohol and polyvinyl pyrrolidone; and
(iii) a cross-linking agent (B) which is a polyfunctional compound represented by the following formula (II);

$$(R^4O)_nR^3(COOR^5)_m \qquad (II)$$

where $R^3$ is a trivalent to hexavalent organic residue; $R^4$ is a hydrogen atom or acetyl group; $R^5$ is a hydrogen atom or alkyl group; and $3 \leq m + n \leq 6$;
the hydrophilic compound (A) being present in the polyester copolymer in an amount of 40 to 99 wt% based on the total weight of the polyester copolymer;
which polyester copolymer has a release parameter ΔMR of at least 12%, where the release parameter ΔMR is the difference between the respective coefficients of moisture absorption MR(%) at 30°C and 90% RH (MR2) and at 20°C and 65% (MR1) and wherein the coefficient of moisture absorption MR is given by

$$MR(\%) = 100\ \frac{(\text{weight after moisture absorption - absolute dry weight})}{\text{absolute dry weight}}$$

**2.** A hygroscopic conjugated fibre according to claim 1, wherein the hygroscopic polyester copolymer has a release parameter (ΔMR) of from 12 to 80%.

**3.** A hygroscopic conjugated fibre according to claim 1 or claim 2, wherein the number average molecular weight of the hydrophilic compound (A) is 600 to 20000.

**4.** A hygroscopic conjugated fibre according to claim 1, claim 2 or claim 3, wherein the hydrophilic compound (A) is a polyoxyalkylene compound.

**5.** A hygroscopic conjugated fibre according to claim 4, wherein the hydrophilic compound (A) is a polyoxyalkylene compound with a crystallinity inhibitor component.

**6.** A hygroscopic conjugated fibre according to claim 5, wherein the polyoxyalkylene compound with a crystallinity inhibitor component is a polyethylene glycol derivative represented by the following formula (I);

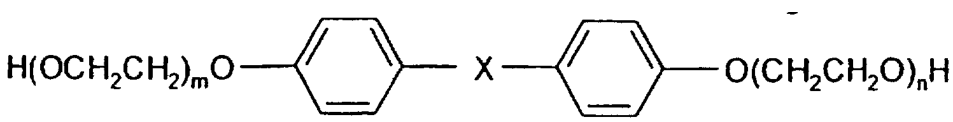

(I)

where X is $-CR^1R^2-$ ($R^1$ and $R^2$ are each, independently of one another, a hydrogen atom or alkyl group), $-SO_2$, -O-, -S- or -C(O)-; and n and m are given by $10 \leq n + m \leq 450$.

**7.** A hygroscopic conjugated fibre according to any preceding claim, wherein the cross-linking agent (B) is present in the polyester copolymer in an amount of 0.01 to 30 mol% based on the total acid content of the entire copolymer, which total acid content includes (when the cross-linking agent (B) is an acid) that of the cross-linking agent (B).

**8.** A hygroscopic conjugated fibre according to any preceding claim, wherein the melt viscosity of the hygroscopic polyester copolymer, measured at 280°C at a shear rate of 50 $cm^{-1}$, is 50 to 500 Pa.s (500 to 5000 poises).

**9.** A hygroscopic conjugated fibre according to any preceding claim, wherein the degree of hygroscopic swelling in 20°C water of the hygroscopic polyester copolymer is from 1.2 to 3.2 times.

**10.** A hygroscopic conjugated fibre according to any preceding claim, which is of a sheath-core type comprising, as a sheath component thereof, a polymer formable into a fibre and, as a core component thereof, the said hygroscopic polyester copolymer.

**11.** A hygroscopic conjugated fibre according to claim 10, wherein the core/sheath conjugating ratio (wt%) is 5/95 to 90/10.

**12.** A hygroscopic conjugated fibre according to claim 10 or claim 11, additionally having a hollow portion provided therein and in contact with the core component.

**13.** A hygroscopic conjugated fibre according to claim 12, wherein the core/sheath conjugating ratio (wt%) is 5/95 to 90/10.

**14.** A hygroscopic conjugated fibre according to claim 12 or claim 13, wherein the hollow portion provides from 1.4% to 70% of the cross-sectional area of the conjugated fibre.

**15.** A hygroscopic conjugated fiber according to any one of claims 1 to 9, which is of an islands in a sea-type comprising, as a sea component thereof, a polymer formable into a fibre and, as island component thereof, the said hygroscopic polyester copolymer.

**16.** A conjugated fiber according to claim 15, wherein the sea/islands conjugating ratio (wt%) is 5/95 to 90/10.

**17.** A hygroscopic conjugated fibre according to any one of claims 1 to 9, which is of a segment type comprising from 95 to 10 wt% of a polymer formable into a fibre and from 5 to 90 wt% of the said hygroscopic polyester copolymer.

**18.** A hygroscopic conjugated fiber according to any preceding claim, wherein the fiber forming polymer is a polyester.

**19.** A hygroscopic conjugated fiber according to any preceding claim, wherein ΔMR of the fiber is at least 1.0%.

**Patentansprüche**

**1.** Hygroskopische konjugierte Faser, die eine konjugierte Fasern bildende Polyesterkomponente und eine konjugierte hygroskopische Polyestercopolymerkomponente umfasst, wobei das Polyestercopolymer Einheiten umfasst, die abgeleitet sind von:

(i) einer Säurekomponente und einer Glykolkomponente, die zur Bildung eines Polyesters fähig sind;
(ii) einer hydrophilen Verbindung (A), die aus Polyoxyalkylenverbindungen, Polyoxazolinen, Polyacrylamid und Derivaten davon, Polysulfoethylmethacrylat, Polyacrylund Polymethacrylsäure und Salzen davon, Polyhydroxyethylacrylat und -methacrylat, Polyvinylalkohol und Polyvinylpyrrolidon ausgewählt ist; und
(iii) einem Vernetzer (B), der eine polyfunktionelle Verbindung der folgenden Formel (II) ist:

$$(R^4O)_nR^3(COOR^5)_m \qquad (II)$$

worin $R^3$ ein dreiwertiger bis sechswertiger organischer Rest ist; $R^4$ ein Wasserstoffatom oder eine Acetylgruppe ist; $R^5$ ein Wasserstoffatom oder eine Alkylgruppe ist; und gilt: $3 \leq m + n \leq 6$;

wobei die hydrophile Verbindung (A) im Polyestercopolymer in einer Menge von 40 bis 90 Gew.-%, bezogen auf das Gesamtgewicht des Polyestercopolymers, enthalten ist;
wobei das Polyestercopolymer einen Freisetzungsparameter ΔMR von zumindest 12 % aufweist, wobei der Freisetzungsparameter ΔMR die Differenz zwischen den jeweiligen Feuchtigkeitabsorptionskoeffizienten MR(%) bei 30 °C und 90 % r.L. (MR2) und bei 20 °C und 65 % r.L. (MR1) ist und wobei der Feuchtigkeitsabsorptionskoeffizient MR durch folgende Gleichung gegeben ist:

$$MR(\%) = 100 \times \frac{(\text{Gewicht nach der Feuchtigkeitsabsorption - absolutes Trockengewicht})}{\text{absolutes Trockengewicht.}}$$

**2.** Hygroskopische konjugierte Faser nach Anspruch 1, worin das hygroskopische Polyestercopolymer einen Freisetzungsparameter (ΔMR) von 12 bis 80 % aufweist.

**3.** Hygroskopische konjugierte Faser nach Anspruch 1 oder 2, worin das zahlenmittlere Molekulargewicht der hydrophilen Verbindung (A) 600 bis 20.000 beträgt.

**4.** Hygroskopische konjugierte Faser nach Anspruch 1, 2 oder 3, worin die hydrophile Verbindung (A) eine Polyoxyalkylenverbindung ist.

**5.** Hygroskopische konjugierte Faser nach Anspruch 4, worin die hydrophile Verbindung (A) eine Polyoxyalkylenverbindung mit einer Kristallinitätsinhibitorkomponente ist.

**6.** Hygroskopische konjugierte Faser nach Anspruch 5, worin die Polyoxyalkylenverbindung mit einer Kristallinitätsinhibitorkomponente ein Polyethylenglykolderivat der folgenden Formel (I) ist:

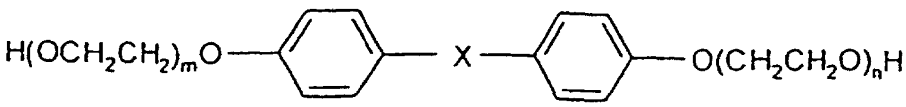

(I)

worin X $-CR^1R^2-$ ($R^1$ und $R^2$ sind jeweils unabhängig voneinander ein Wasserstoffatom oder eine Alkylgruppe), $-SO_2$, -O-, -S- oder-C(O)- ist; und für n und m gilt: $10 \leq n + m \leq 450$.

**7.** Hygroskopische konjugierte Faser nach einem der vorangegangenen Ansprüche, worin der Vernetzer (B) im Polyestercopolymer in einer Menge von 0,01 bis 30 Mol-%, bezogen auf den Gesamtsäuregehalt des gesamten Copolymers, enthalten ist, wobei der Gesamtsäuregehalt (wenn der Vemetzer (B) eine Säure ist) jenen des Vernetzers (B) einschließt.

**8.** Hygroskopische konjugierte Faser nach einem der vorangegangenen Ansprüche, worin die Schmelzviskosität des hygroskopischen Polyestercopolymers, bei 280 °C, bei einer Scherrate von 50 $cm^{-1}$ gemessen, 50 bis 500 Pa.s (500 bis 5.000 Poise) beträgt.

**9.** Hygroskopische konjugierte Faser nach einem der vorangegangenen Ansprüche, worin der Grad des hygroskopischen Quellens des hygroskopischen Polyestercopolymers in Wasser mit 20 °C vom 1,2- bis zum 3,2fachen reicht.

**10.** Hygroskopische konjugierte Faser nach einem der vorangegangenen Ansprüche, die dem Hülle-Kern-Typ angehört, umfassend als ihre Hüllenkomponente ein zu einer Faser formbares Polymer und als ihre Kernkomponente das hygroskopische Polyestercopolymer.

**11.** Hygroskopische konjugierte Faser nach Anspruch 10, worin das Kern/Hüllen-Konjugationsverhältnis (in Gew.-%) 5:95 bis 90:10 beträgt.

**12.** Hygroskopische konjugierte Faser nach Anspruch 10 oder 11, die zusätzlich einen hohlen Abschnitt aufweist, der darin vorgesehen ist und mit der Kernkomponente in Kontakt steht.

**13.** Hygroskopische konjugierte Faser nach Anspruch 12,worin das Kern/Hüllen-Konjugationsverhältnis (in Gew.-%) 5:95 bis 90:10 beträgt.

**14.** Hygroskopische konjugierte Faser nach Anspruch 12 oder 13, worin der hohle Abschnitt 1,4 % bis 70 % der Querschnittsfläche der konjugierten Faser ausmacht.

**15.** Hygroskopische konjugierte Faser nach einem der Ansprüche 1 bis 9, die dem "Inseln-im-Meer"-Typ angehört, wobei sie als ihre Meer-Komponente ein zu einer Faser formbares Polymer und als ihre Insel-Komponente das hygroskopische Polyestercopolymer umfasst.

**16.** Konjugierte Faser nach Anspruch 15, worin das Meer/inseln-Konjugationsverhältnis (in Gew.-%) 5:95 bis 90:10 beträgt.

**17.** Hygroskopische konjugierte Faser nach einem der Ansprüche 1 bis 9, die einem Segmenttyp angehört, der 95 bis 10 Gew.-% eines zu einer Faser formbaren Polymers und 5 bis 90 Gew.-% des hygroskopischen Polyestercopolymers umfasst.

**18.** Hygroskopische konjugierte Faser nach einem der vorangegangenen Ansprüche, worin das faserbildende Polymer ein Polyester ist.

**19.** Hygroskopische konjugierte Faser nach einem der vorangegangenen Ansprüche, worin der $\Delta MR$ der Faser zumindest 1,0 % beträgt.

## Revendications

**1.** Fibre conjuguée hygroscopique comprenant un composant polyester formant une fibre conjuguée et un composant copolymère de polyester hygroscopique conjugué, lequel copolymère de polyester comprend des unités dérivées de

(i) un composant acide et un composant glycol capables de former un polyester;
(ii) un composé hydrophile (A) sélectionné parmi des composés de polyoxyalkylène, les polyoxazolines, le polyacrylamide et ses dérivés, le polysulfoéthyl méthacrylate, l'acide polyacrylique et polyméthacrylique et ses sels, le polyhydroxyéthyl acrylate et méthacrylate, l'alcool polyvinylique et la polyvinylpyrrolidone; et
(iii)un agent réticulant (B) qui est un composé polyfonctionnel représenté par la formule (II) qui suit:

$$(R^4O)_nR^3(COOR^5)_m \qquad \text{(II)}$$

où $R^3$ est un résidu organique trivalent à hexavalent; $R^4$ est un atome d'hydrogène ou un groupe acétyle; $R^5$ est un atome d'hydrogène ou un groupe alkyle; et $3 \leq m + n \leq 6$;
le composé hydrophile (A) étant présent dans le copolymère de polyester en une quantité de 40 à 90% en poids en se basant sur le poids total du copolymère de polyester;
lequel copolymère de polyester a un paramètre de libération ΔMR d'au moins 12%, où le paramètre de libération ΔMR est la différence entre les coefficients respectifs d'absorption d'humidité MR(%) à 30°C et 90% HR (MR2) et à 20°C et 65% (MR1) et où le coefficient d'absorption d'humidité MR est donné par

$$MR(\%) = 100\ \frac{\text{(poids après absorption d'humidité-poids sec absolu)}}{\text{poids sec absolu}}$$

**2.** Fibre conjuguée hygroscopique selon la revendication 1, où le copolymère de polyester hygroscopique a un paramètre de libération (ΔMR) de 12 à 80%.

**3.** Fibre conjuguée hygroscopique selon la revendication 1 ou la revendication 2 où le poids moléculaire moyen en nombre du composé hydrophile (A) est de 600 à 20000.

**4.** Fibre conjuguée hygroscopique selon la revendication 1, la revendication 2 ou la revendication 3, où le composé hydrophile (A) est un composé de polyoxyalkylène.

**5.** Fibre conjuguée hygroscopique selon la revendication 4, où le composé hydrophile (A) est un composé de polyoxyalkylène avec un composant inhibiteur de cristallinité.

**6.** Fibre conjuguée hygroscopique selon la revendication 5, où le composé de polyoxyalkylène avec un composant inhibiteur de cristallinité est un dérivé de polyéthylène glycol représenté par la formule (I) qui suit:

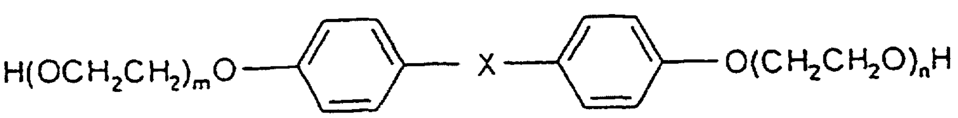

(I)

où X est $-CR^1R^2-$ ($R^1$ et $R^2$ sont chacun, indépendamment l'un de l'autre, un atome d'hydrogène ou un groupe alkyle), $-SO_2$, -O-, -S- ou -C(O)-; et n et m sont donnés par $10 \leq n + m \leq 450$.

**7.** Fibre conjuguée hygroscopique selon toute revendication précédente, où l'agent réticulant (B) est présent dans le copolymère de polyester en une quantité de 0,01 à 30% en moles en se basant sur la teneur totale en acide de tout le copolymère, laquelle teneur totale en acide comprend (quand l'agent réticulant (B) est un acide) celle de l'agent réticulant(s).

**8.** Fibre conjuguée hygroscopique selon toute revendication précédente, où la viscosité en phase fondue du copolymère de polyester hygroscopique, mesurée à 280°C à un taux de cisaillement de 50 $cm^{-1}$, est de 50 à 500 Pa. s (500 à 5000 poises).

**9.** Fibre conjuguée hygrosocopique selon toute revendication précédente, où le degré de gonflement hygroscopique dans de l'eau à 20°C du copolymère de polyester hygroscopique est de 1,2 à 3,2 fois.

**10.** Fibre conjuguée hygroscopique selon toute revendication précédente, qui est du type gaine-âme comprenant, comme composant de sa gaine, un polymère formable en une fibre et, comme composant de son âme, ledit copolymère de polyester hygroscopique.

**11.** Fibre conjuguée hygroscopique selon la revendication 10, où le rapport de conjugaison âme/gaine (% en poids) est de 5/95 à 90/10.

**12.** Fibre conjuguée hygroscopique selon la revendication 10 ou la revendication 11, ayant additionnellement une portion creuse qui est prévue et en contact avec le composant de l'âme.

**13.** Fibre conjuguée hygroscopique selon la revendication 12, où le rapport de conjugaison âme/gaine (% en poids) est de 5/95 à 90/10.

**14.** Fibre conjuguée hygroscopique selon la revendication 12 ou la revendication 13, où la portion creuse forme 1,4% à 70% de l'aire en section transversale de la fibre conjuguée.

**15.** Fibre conjuguée hygroscopique selon l'une quelconque des revendications 1 à 9, qui est d'un type îlots dans une mer comprenant, comme son composant de la mer, un polymère formable en une fibre et, comme composant, des îlots ledit copolymère de polyester hygroscopique.

**16.** Fibre conjuguée selon la revendication 15, où le rapport de conjuguaison en mer/îlots (% en poids) est de 5/95 à 90/10.

**17.** Fibre conjuguée hygroscopique selon l'une quelconque des revendications 1 à 9, qui est d'un type en segments comprenant de 95 à 10% en poids d'un polymère formable en une fibre et de 5 à 90% en poids dudit copolymère de polyester hygroscopique.

**18.** Fibre conjuguée hygroscopique selon toute revendication précédente, où le polymère formant une fibre est un polyester.

**19.** Fibre conjuguée hygroscopique selon toute revendication précédente, où ΔMR de la fibre est d'au moins 1,0%.